# EUROPEAN PATENT APPLICATION

(11) **EP 3 970 505 A1**
(43) Date of publication of application: **23.03.2022**
(21) Application number: 20306045.4
(22) Date of filing: 17.09.2020
(51) Int. Cl.: A23J 1/14, A23K 10/30, A23K 20/147, A23L 33/185

(54) **A SUNFLOWER SEED PROTEIN CONCENTRATE AND PROCESS FOR THE PRODUCTION THEREOF**

(71) Applicant: Avril, 75008 Paris (FR)
(72) Inventor: The designation of the inventor has not yet been filed
(74) Representative: LLR

(57) **Abstract**

A process for producing a protein concentrate from sunflower seed and a sunflower seed concentrate. The process comprises the successive steps of:
a) providing a press cake from oilseed, said oilseed being at least partially dehulled before being pressed;
b) washing said press cake by mixing it with a first acidic aqueous solution to obtain an aqueous-washed oilseed meal;
c) washing said aqueous-washed oilseed meal by mixing it with a first alcohol solvent, to obtain a first alcohol-washed oilseed meal, wherein said first alcohol solvent is a hydrous or a non-hydrous alcohol and has an alcohol concentration which is above 75 % w/w; and
d) separating said alcohol-washed oilseed meal from said solvent to obtain said protein concentrate. The concentrate has a protein content of at least 55% dry matter w/w, preferably at least 65% dry matter w/w, and less than 80% dry matter w/w (N x 6.25); and a content of polyphenol compounds of less than 2% dry matter w/w, preferably equal or less than 1 % dry matter w/w.

## Description

### Field of the invention

The invention relates to a process to extract and/or concentrate proteins from sunflower oilseeds. The invention further relates to the product thus obtained, which is suitable for applications in food or feed.

### Prior art

Sunflower seeds are an important source of proteins having a high nutritional value. In particular, proteins contained in some oilseeds are now widely used in the food or feed industry as, for example, food or food additives, food stabilisers, or as a major nutritious component. These proteins are usually obtained after the seeds (dehulled or not) are crushed and pressed to remove most of the oil and the residual press cake (or cake or expeller) is extracted, generally using hexane, to recover the remainder of the oil. The residual meal from the solvent extraction contains residual hexane and is commonly known as "white flake". The solvent is recovered from the meal for re-use before the meal is disposed of by the Desolventizer-Toaster. In the solvent recovery process, the oilseed meal is often heated to a higher temperature of about 120°C to 140° C in a procedure termed "toasting". Hexane is obtained from petrochemical sources. It is now regarded as generally desirable to avoid using hexane in the production of foodstuff.

One of the challenges of sunflower protein concentration is the presence of polyphenols, and particularly chlorogenic acid, which impart an undesirable greenish colour or hue to the concentrate.

Rahma et al. (1981) reports several aqueous-alcoholic protein recovery processes for the production of sunflower protein concentrates from dehulled and hexane-extracted defatted meal (flours). Aqueous ethanol and acidic n-butanol and a mixture thereof were tested by washing the meals at room temperature 2 to 4 times. This produced unsatisfactory results. Although chlorogenic acid is removed to some extent, the use of these organic solvents is associated with a decrease of nitrogen solubility index (NSI) and a denaturation of the proteins. The use of aqueous ethanol decreases fat absorption, emulsification and foaming capacity.

The same effect of denaturation (or conformational changes) of the proteins have been reported G. Sripad et al. (1987). The use of methanol or ethanol (around 40%) was also described on hexane-extracted, i.e. highly defatted, meals.

More recently WO 02/060273 A1 (TNO) describes a method to remove phenolic compounds from an aqueous extract of a sunflower meal using inter alia ethanol at a concentration of up to 30%. It is further described that a concentration of ethanol ranging from 5 to 15% (v/v) together with a pH adjustment at pH 5 is beneficial to the removal of polyphenols.

WO 2013/013949 A1 (DSM IP ASSETS) describes that the concentration of ethanol can be increased up to 70% aqueous ethanol when used on an aqueous extract of an oilseed cake in order to precipitate the protein, this to obtain a very pure isolate. It discloses that ethanol allows the removal of phytates and phenolic compounds (including chlorogenic acid) which are perceived as "anti-nutritional".

As there are increased demands for protein concentrates having particular profiles in terms of colour, low amounts of polyphenols, and/or in particular low amount of chlorogenic acid, increased or enhanced digestibility, emulsifying capacity, nitrogen solubility profile, viscosity profile and/or water holding capacity; there is a need for a sunflower protein concentrate having at least one, and preferably many, of these desirable characteristics as well as for a process suitable for preparing such a protein concentrate on an industrial scale and/or providing a high yield of protein at limited costs without the use of hexane. Due to the great number of goals to reach, optimising a purification process to obtain a cost effective method and a quality product has proven to be a most difficult and challenging task. These challenges are compounded when the extraction is carried out on a sunflower seed meal containing up to 15 wt. %, generally from 3 to 12 wt. % of oil or fat as the presence of fatty compounds reduces the efficient removal of polyphenols, and in particular of chlorogenic acid, during the extraction processes.

### Description of the invention

It is therefore an object of the invention to provide a method to obtain a protein concentrate from sunflower seeds which can be used on sunflower seed extracted meals, preferably on non-organic solvent (*e.g*., hexane) extracted meals. It is a further object of the invention to provide a protein concentrate from these oilseeds having at least one of the following characteristics:
- a colour with no detectable green hue;
- a low amount of polyphenols and, in particular, a low amount of chlorogenic acid;
- an amino acids profile close to the one of sunflower seeds;
- an increased or enhanced digestibility, emulsifying capacity, nitrogen solubility profile, viscosity profile and/or water holding capacity
- being obtainable using the process of the invention; and
- being suitable for applications in food or feed.

Alternatively, or additionally, it is also an object of the invention to provide a process to obtain a concentrate of sunflower seeds proteins which is more environmentally friendly by using green solvents, such and/or minimising the use and/or the amount of organic solvents.

According to one aspect of the invention it is provided a process for producing a sunflower seed protein concentrate from oilseed, said process comprising the successive steps of:
a) providing a press cake from oilseed, said oilseed being sunflower seeds such as from the *Helianthus annuus L.* species, said oilseed being at least partially dehulled before being pressed;
b) washing said press cake by mixing it with a first acidic aqueous solution to obtain an aqueous-washed oilseed meal;
c) washing said aqueous-washed oilseed meal by mixing it with a first alcohol solvent, to obtain a first alcohol-washed oilseed meal, wherein said first alcohol solvent is a hydrous or a non-hydrous alcohol and has an alcohol concentration which may be above 75 % w/w; and
d) separating said alcohol-washed oilseed meal from said solvent to obtain said protein concentrate.

Such a process, or method, allows obtaining a high quality concentrate on an industrial scale.

A distinction between protein "concentrates" and protein "isolates" is made due to the production and the resulting protein content. Plant protein isolates have a very high protein content of at least 80 wt. % on dry matter (N x 6.25) compared to plant protein concentrates which have a protein content ranging from 55 wt.% and less than 80 wt. % on dry matter (N x 6.25). Usually, to prepare protein isolates, the proteins are dissolved in water (not comprising large amount of alcohol) and then isolated from the aqueous solution.

### OILSEED/STARTING MATERIAL

In this specification the oilseeds are from a sunflower plant, i.e. a plant from the genus *Helianthus,* in particular the common sunflower: *Helianthus annuus L..* The term sunflower used in this specification encompasses not only common sunflower but also all the members of the genus. Although almost whole of the sunflower oilseed production is in fact from common sunflower, other species of oilseeds from the genus, as well as new varieties of plant, or variants, obtained by crossbreeding or genetic modifications are also encompassed by the term "sunflower" which is used in its broadest possible sense as the process of the invention can be applied to the oilseeds produced by member of the genus.

The press cake used is obtained from at least "partially" dehulled oilseed (*Helianthus* seeds). Processing steps of oilseed dehulling are well known in the art (Laisney, 1984; Matthäus, 2012). The dehulling step includes removing the hull from the oilseed. The dehulling step produces a "dehulled oilseed" or oilseed kernels. At the industrial scale, the dehulling is generally partial. By "partially dehulled oilseed", it is meant that 10% w/w, preferably 50% w/w, more preferably 75% w/w, most preferably 90% w/w of the hull has been removed from the oilseed . The oilseed is preferably completely (*i.e*. fully) dehulled.

Therefore, the use of fully dehulled seeds (i.e. kernels) as starting material is specifically encompassed by the invention. According to a preferred embodiment of the invention, the sunflower seeds used in the process of the invention are kernels. Kernels consist, or consist essentially of fully dehulled sunflower seeds. By "consist essentially" it is meant that the seeds used are at least 95 %, preferably 98% and more advantageously 99% kernels in weight percent over the total dry matter weight (%/DM w/w). The use of kernels, combined with the process of the invention results in a product which has straight white colour, which is pleasing to the consumers and which, when dissolved within water at basic pH does not have any unappealing greenish hue.

Oilseed kernels or dehulled seed can advantageously be cracked into smaller particles and then possibly flattened into thin flakes, especially if they are cooked before screw pressing. Processing steps of oilseed flaking are well known in the art (Laisney, 1984; Unger, 1990; Matthäus, 2012). In certain embodiments, the oilseed can be pre-heated before flaking at a temperature generally ranging from 30°C to 50°C. The flaking step produces a "flaked oilseed". The flaking step is achieved in a flaking mill, through flaking rolls.

### PRESSING

Processing steps of oilseed pressing are well known in the art (Laisney, 1984; Unger, 1990; Matthäus, 2012). The pressing step includes partially removing the oil from the oilseed, *i.e.,* removing at least 60% (w/w) of the oil from the oilseed.

The oilseed press cake to be used in the method according to the present invention is preferably obtained by cold-pressing, i.e. the seeds are preferably not cooked prior to its passing through the press. In the press, the seeds (e.g. kernels) are crushed and some of the seed oil is thus expelled. Even during the pressing step, it is preferred that the temperature of the oilseed does not go beyond 85°C, preferably not beyond 80°C, more preferably not beyond 74°C. The pressing step is achieved (mechanically) in a press, preferably a screw press. The process is advantageously carried out at a temperature above room temperature such as equal to, or above, 22°C. A preferred screw press is a barrel-type screw press with vertically split hinged barrel, such as the type commercially available from CPM SKET GmbH (Germany) or MBU20 sold by the French Company OLEXA (Feuchy, FR). According to an advantageous embodiment of the invention, the moisture content of the oilseed at the inlet of the press, or before the pressing, is ranging from 2% to 8%, preferably from 3% to 7%, e.g. 6%. Hence the process of the invention may advantageously include a step of moisturizing and/or drying the oilseed prior to carrying out the pressing step, in order to achieve the advantageous moisture content. In another advantageous embodiment of the invention, the temperature of the oilseed at the inlet of the press, or prior to the pressing step, is ranging from 10°C to 40°C, preferably from 10°C to 30°C, more preferably from 18°C to 25°C, most preferably 20°C to 22°C. The appropriate moisture content or temperature of the oilseed can be obtained by heating the over-moist/cold oilseed at a temperature of 50°C or less prior to pressing, preferably at a temperature ranging from 30°C to 40°C. This would be particularly suitable when, for example, the oilseed is stored under particular cold (e.g. winter) or wet conditions.

Due to press friction during the pressing step, the temperature of the oilseed is increasing. However, the temperature of the oilseed during the pressing step shall be maintained as of 80°C or less and by order of increasing preference 75°C or less, 72°C or less, 69°C or less, most preferably 67°C or less. As it will be easily understood, it is also advantageous that the temperature does not drop too low. The temperature lower limit is generally considered to be about or above room temperature, e.g. 22°C. Advantageously, the temperature of the resulting oilseed press cake at the press outlet is ranging from 50°C to 75°C, preferably 60°C to 70°C. The pressing step produces an "oilseed press cake", also named "oilseed expeller". The pressing step according to the present invention can be repeated at least twice (double-pressing or more). According to a preferred embodiment of the invention the sunflower seed press cake has an oil content ranging from 5% to 30% dry w/w, in particular from 6% to 15% dry w/w. This is higher than hexane defatted meal. The oil content of the oilseed press cake can depend on the temperature of the oilseed during the pressing or the number of pressing steps. By way of example, the sunflower seed press cake obtained by cold-pressing at a temperature of 74°C or less (e.g. 64°C to 72°C) can have an oil content ranging from 7% to 20% dry w/w, in particular from 7% to 12% dry w/w, determined by the adapted Soxhlet extraction method.

According to a particularly preferred aspect of the invention, the sunflower seed, the pressed sunflower seed (i.e., sunflower seed press cake), and more generally the product obtained according to the process of the invention, is not treated with a non-polar solvent and in particular is not treated with hexane or n-hexane. Thus, the product obtained from the method of the invention is not contacted with such a solvent at any time during the process and the process does therefore not include the use of such a compound or compounds.

### ACIDIC AQUEOUS WASH

According to the invention the sunflower press cake is washed, at least once, by mixing it with a first acidic aqueous solution to obtain an aqueous-washed oilseed meal. The acidic aqueous solution comprises obviously water, which can be pure water (aqua) or drinking water. The pH of the mixture is advantageously adjusted to range from 4.0 to 5.2, preferably 4.4 to 5.2, more preferably from 4.6 to 5.0 and most preferably from 4.7 to 4.9. This adjustment can be made by any means known to skilled person but preferably comprises the use of water which is acidified beforehand. For example, this acidification can be carried out by adding an acid such as the ones mentioned below. The use of phosphoric acid was found satisfactory. The acidified water can have a lower pH than the one which is sought to be achieved within the mixture. Using acidified water having a pH ranging from 1.5 to 3, in particular a pH of around 2, has demonstrated good results.

In order to adjust the pH of the mixture, once the (preferably acidified) water has been added to the press cake, a component acting as a pH regulator, such as an acid or a base, can be added. For example, this component can be a mineral or a salt such as an alkali, (e.g. NaOH, Ca(OH)2 and/or Na2CO3), or a weak acid, such as lactic acid, citric acid, propionic acid, ascorbic acid, phosphoric acid or sodium bisulphite, preferably phosphoric acid. Phosphoric acid at a suitable concentration (e.g. 75% (v/v), or 1 M) is preferred.

It is further preferred that the acidic aqueous liquid used to wash the oilseed press cake does not contain an alcohol.

The weight ratio of (sunflower seed press cake) : (water) used can range from 1:15 to 1:4 w/w, preferably 1:10 to 1:6, e.g. about 1:8. The term water in this ratio encompasses the mass of water as well as the mass of acidified water, if the water is acidified prior to be added to the press cake.

According to a particular embodiment of the invention, the temperature set during the extracting step is ranging from 45°C to 65°C, preferably from 50°C to 65°C and most preferably from 55°C to 60°C.

According to another advantageous embodiment of the invention the residence time of the sunflower seed meal within the aqueous solution may range from 10 minutes to 90 minutes, preferably around 30 minutes to 60 minutes, most preferably from 40 minutes to 50 minutes, e.g. around 45 minutes.

As it is usual the aqueous solution and the sunflower seed meal can generally be admixed together by general stirring. When the acidic aqueous washing step is over, the solid can be separated from the liquid (spent aqueous solution) by usual liquid-solid separation such as decantation, filtration with a meshed material, membrane or cloth (e.g. 10µm meshed material). Decantation means, in particular a centrifugation step, is preferred. Such a step can be carried out with standard decanter which can develop centrifugal forces speed of 3000 to 5000 g, preferably around 4000 g.

The washing step can be carried in a tank, such as an agitated filter tank, a jacketed reactor, an extractor, such as an immersion extractor, or a percolation extractor (e.g., shallow bed percolation extractor). The solid material within the mixture is a sunflower press cake, that is, a de-oiled sunflower seed meal. The term "de-oiled" is not meant to describe a product where no oil remains; it simply describes the fact that compared with the starting sunflower seeds, the resulting product presents less oil. Once the acidic aqueous washing step has been carried out the resulting solid is an aqueous-washed sunflower meal.

According to an embodiment of the invention it is considered that repeating the acidic washing step could be advantageous. In particular repeating this step more than once, preferably more than twice, in particular more than 4 times could improve the outcome.

According to a particularly preferred embodiment of the invention, the process of the invention comprises only one acidic washing step and not several, as it has surprisingly been found that satisfactory results can be achieved using a single wash. The economy of water connected with a process with limited amount aqueous wash is highly beneficial to the environment and to the cost effectiveness of the process.

### ALCOHOL WASH

According to the process of the invention the aqueous-washed oilseed meal is then washed by mixing it with a first alcohol solvent, to obtain a first alcohol-washed oilseed meal. The first alcohol solvent is a hydrous, a non-hydrous or an azeotrope mixture of alcohol and has preferably an alcohol concentration which may be above 75 % w/w. Preferably an azeotrope (alcohol with a few percent water is used).

The alcohol contained in the alcohol solvent is preferably chosen in the group of C1 to C20 aliphatic organic compounds, branched or not branched, that carry at least one hydroxyl functional group, and their mixture thereof. According to another preferred embodiment of the invention the alcohol solvent is a lower (C1 to C6) aliphatic alcohol, such as ethanol, isopropanol, methanol, or a mixture thereof, preferably ethanol. As amongst these, ethanol is the alcohol which appears the most suitable.

As it is well known and well understood in the art, alcohols are hydrophilic compounds and usually contain in their commercial form a small amount of water. Hence the alcohol to be used can contains a small amount of water, in general 96% (w/w), and in particular 96% (w/w) ethanol (also called "ethanol"), is the alcohol concentration most commonly used, but higher concentration, such as up to 99% (e.g. absolute alcohol) can also be used. This step can be repeated, hence there can be two, three, four etc.... alcohol washes.

Advantageously the step of washing with an alcohol solvent is repeated no more than once.

The alcohol solvent can comprise higher amounts of water and include what is generally known as aqueous alcohol, wherein the percentage of alcohol is about 70% (w/w), the remaining compound being water.
However better results are obtained with solvent containing a higher concentration of alcohol. It is recommended that the solvent has an alcohol concentration of alcohol over water ranging from 75% to 99 % (w/w), preferably from 80% to 99% (w/w), for example 96% (w/w). The alcoholic solvent can comprise or consist of the aqueous azeotrope of the selected alcohol, or mixtures thereof that is 96% w/w for ethanol, and 88% w/w for isopropanol, preferably +/- 2% (w/w). It was surprisingly found that, succeeding to an acidic aqueous washing step, using an alcohol-concentrated solvent has a lower denaturing effect and/or maintains an acceptable NSI towards the sunflower seed proteins.

The use of an alcohol solvent comprising at least 94 % (w/w) and preferably 96% (w/w) of alcohol, and preferably ethanol, the remaining compound being water (or aqua), is highly preferred.

Other compounds, in particular polar solvents, to the exclusion of water, can be used in association with the alcohol. However, according to a preferred embodiment, only alcohol(s) is used to minimise the costs and the environmental consequences of the process. It should be noted that the term "an alcohol" used in the present specification encompasses mixture of alcohols.

Preferably, the sunflower seed aqueous-washed meal is mixed with the alcohol solvent according to a weight ratio (solids):(alcohol solvent) ranging from 1:2 to 1:8 w/w, preferably 1:3 to 1:4, e.g. about 1:3.5.

According to a particular embodiment of the invention, the temperature set during the alcohol washing step is ranging from 45°C to 67°C, preferably from 55°C to 65°C, in particular around 60°C.

According to another advantageous embodiment of the invention, the residence time of the aqueous-washed oilseed meal within the alcohol solvent may range from 5 minutes to 60 minutes, preferably around 7 minutes to 50 minutes, most preferably from 10 minutes to 40 minutes, e.g. around 10 to 30 minutes.

As it is usual the alcohol solvent and the aqueous-washed sunflower seeds meal can generally be admixed together by general stirring. When the washing step is over, the solid is separated from the liquid (spent first alcohol solution) by usual liquid-solid separation as described above in reference with the acidic washing step.

According to an embodiment of the invention it has been found that to repeat the extracting step at least once is advantageous, especially if:
- lowering the amount of oil and the chlorogenic acid from the protein concentrate; or
- enhancing its water holding capacity, oil holding capacity or emulsifying capacity (ml);
is a specific aim. In particular it was found that repeating the alcohol washing step once lead to concentrate having such properties.

Thus, according to a particularly preferred embodiment of the invention, the process of the invention may comprise only one or two alcohol washing step, as it has surprisingly been found that satisfactory results can be achieved using a single or at most two alcohol washes. The economy of alcohol connected with a process with limited amount of alcohol solvent is highly beneficial to the environment and to the cost effectiveness of the process.

It should be noted, that only two washing steps, one being an acidic aqueous wash and the other an alcohol solvent wash, can be sufficient to satisfactorily eliminate the chlorogenic acid from the oilseed concentrate.

When more than one alcohol washing step is carried out, it can be beneficial to use a recycled solvent (that is the spent first alcohol solvent which was used from a previous extracting step) for all of the repeated steps. Alternatively, recycled solvent and fresh solvent can be both used each for a distinct wash/step. It may also be more economical to use a mixture of fresh and recycled alcohol for some or all of the steps.

The spent solution(s) (the first and subsequent solvent) above described are rich in free chlorogenic acid (CGA). CGA can therefore be extracted from this solution for further uses.

According to an advantageous embodiment of the invention the pH during the alcohol washing step can be adjusted. This pH can be adjusted to range from 6 to 7.5 and is advantageously set to 6.5 ± 0.2.

In order to adjust the pH of the first solution (solvent) a component acting as a pH regulator, such as an acid or a base, can be added. For example, this component can be a mineral or a salt such as an alkali, (e.g. NaOH), or a weak acid, such as the ones mentioned before.

As it is usual, when the alcohol washing step is over the solid is separated from the liquid by usual liquid-solid separation as described above in reference to the acidic washing step. The solid thus obtained is a protein concentrate according to the invention.

### DESOLVENTIZING (DRYING)

According to a preferred embodiment of the invention, the protein concentrate is subjected to a desolventizing step which may be achieved under partial vacuum, using, for example, a vacuum paddle dryer; a drying stove or a laminar flow hood.in particular a Paddle vacuum Dryer, Double Cone Dryer or a Down Draft Desolventizer (DDD). A drying oven or a double cone vacuum dryer can also be used. Alternatively, it can be achieved in tank or reactor wherein the process has taken place by applying a vacuum (e.g. 0.1 to 0.2 bar) and at a convenient temperature (e.g. below 70°C, preferably below 60°C). The use of a vacuum allows to minimise denaturation of the proteins. According to an advantageous embodiment of the invention the residence time of the concentrate sunflower seed protein is ranging from 100 minutes to 200 minutes, preferably 120 minutes. Advantageously the temperature is lower than 70°C, preferably lower than 60°C. For example, the temperature is ranging from 50 to 60°C, preferably for about 180 ± 10 mins.

Advantageously, the oilseed protein concentrate is dried to reach a moisture content ranging from 5% to 10%. This step produces a "dry oilseed protein concentrate".

### SIEVING (SORTING)

The dry oilseed protein concentrate can be subjected to at least one sieving (or sorting) step. Sieving technologies are well known in the art. For example, one can use a sieving or plansifter machine or a triboseparator. However, when the press cake is made from kernels (completely dehulled seeds) this step is usually not required and can be omitted.

### MILLING-MICRONISING

Additionally, or alternatively, the dried oilseed protein concentrate can be transformed into a powder, such as a micronized powder. This step can be carried out by using a milling technology such as air jet mill or impact mill For example. Advantageously, the oilseed protein concentrate has a D50 (µm) average particle size comprised, between 25µm and 100µm, preferably between 25µm and 50µm, more preferably between 30µm and 40µm.

Advantageously, the oilseed protein concentrate has a D99 (µm) average particle size comprised, between 400µm and 800µm, preferably between 450µm and 500µm, more preferably between 460µm and 480µm. The average size particle of the sunflower protein concentrate before and after milling can be measured using laser diffraction (Mastersizer 2000, Malvern, cell, dispersion unit Hydro 2000, dispersant: Alcool, refractive index: 1,52, Absorption: 0,1). This optional milling step allows obtaining a homogenous product close to soy protein concentrate.

A micronized powder, or flour, is therefore another object of the invention. Preferably the powder, or flour, is a white powder. Such a white powder is obtainable according to the process of the invention, in particular when the press cake used is a press cake obtained from kernels, that is seeds which are dehulled.

### OTHER

According to one embodiment of the process of the invention, the alcohol used is ethanol, and preferably ethanol at 96% (w/w) in all of the alcohol-using processing steps.

According to one embodiment of the process of the invention, the oilseed is not flaked prior to step a).

According to another embodiment of the process of the invention, it does not comprise a microfiltration or diafiltration step.

According to yet another embodiment of the process of the invention, it does not comprise the use of a cyclone concentrator or a cyclone concentration step.

The washing steps of the process of the invention advantageously include removing (extracting) at least some undesirable molecules (UM) such as carbohydrates (monosaccharides, disaccharides and oligosaccharides) and phenolic compounds such as chlorogenic acids, from the defatted oilseed meal. Carbohydrates, or sugars, include monosaccharides (such as fructose, glucose, and galactose), disaccharide (sucrose), and alpha-galactosyl derivatives of glucose, among which most common are the trisaccharide raffinose, the tetrasaccharide stachyose, and the pentasaccharide verbascose.

### SUNFLOWER SEED PROTEIN CONCENTRATE

As mentioned before a particular object of the invention is a sunflower protein concentrate.

Another object of the invention is an oilseed protein concentrate obtained or obtainable by a process of the present invention as described therein.

According to another object of the invention the sunflower seed protein concentrate of the invention comprises an amino acid profile which is very similar to the one of the sunflower seeds of origin. In particular, the amount of a particular amino acid (g/100g protein) of the concentrate is within ± 10%, preferably ± 6% of the amount of said amino acid of the protein (g/100g protein) oilseeds before being processed. According to a particular object of the invention, the sunflower seed concentrate of the invention comprises a content of sulphur amino acids (i.e. cysteine and methionine) which ranges from 1% to 5% (w/w), preferably from 1.5 % to 4% (w/w), and in particular from 2% to 3.6% (w/w) with respect of the total protein weight. According to a particular object of the invention, the sunflower seed concentrate of the invention comprises a lysine content which ranges from 2% to 5% (w/w), preferably from 2.5 % to 4% (w/w), and in particular from 2.5% to 3.6% (w/w), e.g. around 3.2%, with respect to total protein weight.

According to a particularly preferred object of the invention the sunflower seed protein concentrate has an acceptable amount of chlorogenic acid. By "acceptable amount" it is meant that the concentrate has a colour, which is considered neutral, such as beige and preferably white, and does not look green or greenish to a human eye especially when the concentrate is mixed at 2% with water at pH 9. The specification of a visual test is provided in the Examples below.

According to another object of the invention the sunflower seed protein concentrate of the invention, which may be advantageously obtained or obtainable by the process of the present invention, comprises:
- a protein content of at least 55% dry matter w/w, pref. 58% dry matter w/w (DM), preferably at least 60% dry matter w/w and especially at least 65%, and less than 80% dry matter w/w (N x 6.25); and
- a content of polyphenol compounds of less than 2% DM w/w, preferably equal or less than 1 % dry matter w/w.

It is preferred that the concentrate of the invention, advantageously obtained or obtainable by the process of the present invention, comprises a fat content of less than 14% dry matter w/w, preferably less than 10% DM w/w, in particular less than 3 % dry matter. Thus, a preferred concentrate of the invention comprises:
- a protein content of at least 55% dry matter w/w, pref. 58% dry matter w/w (DM), preferably at least 60% dry matter w/w and especially at least 65%, and less than 80% dry matter w/w (N x 6.25);
- a content of polyphenol compounds of less than 2% DM w/w, preferably equal or less than 1 % dry matter w/w; and
- a fat content of less than 14% dry matter w/w, preferably less than 10% DM w/w, in particular less than 3 % dry matter.

It is also preferred that the sunflower seed protein concentrate, advantageously obtained or obtainable by the process of the present invention, has a water holding capacity (WHC) per gram of concentrate, of at least 3 g/g, preferably from 3.4 g/g to 7.0 g/g, in particular from 4.8 g/g to 5.5 g/g of concentrate; the method for measuring the WHC being described in the Examples below. A preferred concentrate of the invention comprises:
- a protein content of at least 55% dry matter w/w, pref. 58% dry matter w/w (DM), preferably at least 60% dry matter w/w and especially at least 65%, and less than 80% dry matter w/w (N x 6.25);
- a content of polyphenol compounds of less than 2% DM w/w, preferably equal or less than 1 % dry matter w/w;
- a fat content of less than 14% dry matter w/w, preferably less than 10% DM w/w, in particular less than 3 % dry matter; and
- a water holding capacity (WHC) of at least 3 g/g, preferably from 3.4 g/g to 7.0 g/g, in particular from 4.8 g/g to 5.5 g/g of concentrate.

It is further preferred that the protein concentrate, advantageously obtained or obtainable by the process of the present invention, has a minimum gelling concentration of 12 % (w/w) protein content or less, preferably of 10% or less and even more preferably of 6% or less protein content. A preferred concentrate of the invention comprises:
- a protein content of at least 55% dry matter w/w, pref. 58% dry matter w/w (DM), preferably at least 60% dry matter w/w and especially at least 65%, and less than 80% dry matter w/w (N x 6.25);
- a content of polyphenol compounds of less than 2% DM w/w, preferably equal or less than 1 % dry matter w/w;
- a fat content of less than 14% dry matter w/w, preferably less than 10% DM w/w, in particular less than 3 % dry matter;
- a water holding capacity (WHC) of at least 3 g/g, preferably from 3.4 g/g to 7.0 g/g, in particular from 4.8 g/g to 5.5 g/g of concentrate; and
- a minimum gelling concentration of 12 % (w/w) protein content or less, preferably of 10% or less and even more preferably of 6% or less protein content.

It is further preferred that the protein concentrate, advantageously obtained or obtainable by the process of the present invention, comprises a total sugar content of 1.5 % (w/w) / DM or less, preferably of 1.0 % (w/w) / DM and even preferably of 0.5 % (w/w) / DM or less. It is also particularly advantageous that the concentrate comprises less than 0.5 % (w/w) / DM of alpha-galactosyl derivatives of glucose (such as raffinose, stachyose, and verbascose), and particularly less than 0.3 % (w/w) / DM. A preferred concentrate of the invention comprises:
- a protein content of at least 55% dry matter w/w, pref. 58% dry matter w/w (DM), preferably at least 60% dry matter w/w and especially at least 65%, and less than 80% dry matter w/w (N x 6.25);
- a content of polyphenol compounds of less than 2% DM w/w, preferably equal or less than 1 % dry matter w/w;
- a fat content of less than 14% dry matter w/w, preferably less than 10% DM w/w, in particular less than 3 % dry matter;
- a water holding capacity (WHC) of at least 3 g/g, preferably from 3.4 g/g to 7.0 g/g, in particular from 4.8 g/g to 5.5 g/g of concentrate;
- a minimum gelling concentration of 12 % (w/w) protein content or less, preferably of 10% or less and even more preferably of 6% or less protein content; and
- a total sugar content of 1.5 % (w/w) / DM or less, preferably of 1.0 % (w/w) / DM and even preferably of 0.5 % (w/w) / DM or less.

Preferably, the sunflower seed protein concentrate, advantageously obtained or obtainable by the process of the present invention, comprises a cellulose content ranging from 5% to 15% DM w/w, preferably from 8% to 12% DM w/w, in particular from 7% to 11% DM w/w. A preferred concentrate of the invention comprises:
- a protein content of at least 55% dry matter w/w, pref. 58% dry matter w/w (DM), preferably at least 60% dry matter w/w and especially at least 65%, and less than 80% dry matter w/w (N x 6.25);
- a content of polyphenol compounds of less than 2% DM w/w, preferably equal or less than 1 % dry matter w/w;
- a fat content of less than 14% dry matter w/w, preferably less than 10% DM w/w, in particular less than 3 % dry matter;
- a water holding capacity (WHC) of at least 3 g/g, preferably from 3.4 g/g to 7.0 g/g, in particular from 4.8 g/g to 5.5 g/g per gram of concentrate;
- a minimum gelling concentration of 12 % (w/w) protein content or less, preferably of 10% or less and even more preferably of 6% or less protein content;
- a total sugar content of 1.5 % (w/w) / DM or less, preferably of 1.0 % (w/w) / DM and even preferably of 0.5 % (w/w) / DM or less ; and
- a cellulose content ranging from 5% to 15% DM w/w, preferably from 8% to 12% DM w/w, in particular from 7% to 11% DM w/w.

It is further preferred that the protein concentrate of the invention, advantageously obtained or obtainable by the process of the present invention, comprises a maximum total phosphorus content ranging from 1 to 2 % DM (w/w), the method for measuring the amount of phosphorus being described in the Examples below. This is particularly preferred if phosphoric acid is used in the process of manufacturing the concentrate.

Preferably, the sunflower seed protein concentrate, advantageously obtained or obtainable by the process of the present invention, has a good emulsifying capacity. It may range, per gram of concentrate from 100 to 500 g of sunflower oil, in particular from to 125 to 300 g of sunflower oil, in particular from 140 to 250 g of sunflower oil (such as about 155 g of sunflower oil) per g of protein concentrate; the method for measuring the emulsifying capacity being described in the Examples below. A preferred concentrate of the invention comprises:
- a protein content of at least 55% dry matter w/w, pref. 58% dry matter w/w (DM), preferably at least 60% dry matter w/w and especially at least 65%, and less than 80% dry matter w/w (N x 6.25);
- a content of polyphenol compounds of less than 2% DM w/w, preferably equal or less than 1 % dry matter w/w;
- a fat content of less than 14% dry matter w/w, preferably less than 10% DM w/w, in particular less than 3 % dry matter;
- a water holding capacity (WHC) of at least 3 g/g, preferably from 3.4 g/g to 7.0 g/g, in particular from 4.8 g/g to 5.5 g/g per gram of concentrate;
- a minimum gelling concentration of 12 % (w/w) protein content or less, preferably of 10% or less and even more preferably of 6% or less protein content;
- a total sugar content of 1.5 % (w/w) / DM or less, preferably of 1.0 % (w/w) / DM and even preferably of 0.5 % (w/w) / DM or less ;
- a cellulose content ranging from 5% to 15% DM w/w, preferably from 8% to 12% DM w/w, in particular from 7% to 11% DM w/w; and
- an emulsifying capacity ranging from 100 to 500 g of sunflower oil, in particular from to 125 to 300 g of sunflower oil, in particular from 140 to 250 g of sunflower oil (such as about 155 g of sunflower oil) per gram of concentrate.

Preferably, the sunflower seed protein concentrate, advantageously obtained or obtainable by the process of the present invention, may be insoluble, that is has a protein solubility of more than 10 % and less than 45%, in an aqueous solution at a pH ranging from 7 to 10, preferably more than 10% and less than 40% in an aqueous solution at a pH ranging from 7 to 8; the solubility being measured by the method described in the Examples (see infra). A preferred concentrate of the invention comprises:
- a protein content of at least 55% dry matter w/w, pref. 58% dry matter w/w (DM), preferably at least 60% dry matter w/w and especially at least 65%, and less than 80% dry matter w/w (N x 6.25);
- a content of polyphenol compounds of less than 2% DM w/w, preferably equal or less than 1 % dry matter w/w;
- a fat content of less than 14% dry matter w/w, preferably less than 10% DM w/w, in particular less than 3 % dry matter;
- a water holding capacity (WHC) of at least 3 g/g, preferably from 3.4 g/g to 7.0 g/g, in particular from 4.8 g/g to 5.5 g/g per gram of concentrate;
- a minimum gelling concentration of 12 % (w/w) protein content or less, preferably of 10% or less and even more preferably of 6% or less protein content;
- a total sugar content of 1.5 % (w/w) / DM or less, preferably of 1.0 % (w/w) / DM and even preferably of 0.5 % (w/w) / DM or less ;
- a cellulose content ranging from 5% to 15% DM w/w, preferably from 8% to 12% DM w/w, in particular from 7% to 11% DM w/w;
- an emulsifying capacity ranging from 100 to 500 g of sunflower oil, in particular from to 125 to 300 g of sunflower oil, in particular from 140 to 250 g of sunflower oil (such as about 155 g of sunflower oil) per gram of concentrate; and
- a protein solubility of more than 10 % and less than 45%, in an aqueous solution at a pH ranging from 7 to 10, preferably more than 10% and less than 40% in an aqueous solution at a pH ranging from 7 to 8.

Preferably, the oilseed protein concentrate, advantageously obtained or obtainable by the process of the present invention, is a powder made of particles. This powder may have a D50 (µm) average particle size ranging from 25µm and 200µm, preferably between 25µm and 50µm, more preferably between 30µm and 40µm; and/or
a D90 (µm) average particle size ranging from 100µm and 500µm, preferably between 140 µm and 400µm, more preferably between 170 µm and 390 µm. A preferred concentrate of the invention comprises:
- a protein content of at least 55% dry matter w/w, pref. 58% dry matter w/w (DM), preferably at least 60% dry matter w/w and especially at least 65%, and less than 80% dry matter w/w (N x 6.25);
- a content of polyphenol compounds of less than 2% DM w/w, preferably equal or less than 1 % dry matter w/w;
- a fat content of less than 14% dry matter w/w, preferably less than 10% DM w/w, in particular less than 3 % dry matter;
- a water holding capacity (WHC) of at least 3 g/g, preferably from 3.4 g/g to 7.0 g/g, in particular from 4.8 g/g to 5.5 g/g of concentrate;
- a minimum gelling concentration of 12 % (w/w) protein content or less, preferably of 10% or less and even more preferably of 6% or less protein content;
- a total sugar content of 1.5 % (w/w) / DM or less, preferably of 1.0 % (w/w) / DM and even preferably of 0.5 % (w/w) / DM or less ;
- a cellulose content ranging from 5% to 15% DM w/w, preferably from 8% to 12% DM w/w, in particular from 7% to 11% DM w/w;
- an emulsifying capacity ranging from 100 to 500 g of sunflower oil, in particular from to 125 to 300 g of sunflower oil, in particular from 140 to 250 g of sunflower oil (such as about 155 ml of sunflower oil) per gram of concentrate;
- a protein solubility of more than 10 % and less than 45%, in an aqueous solution at a pH ranging from 7 to 10, preferably more than 10% and less than 40% in an aqueous solution at a pH ranging from 7 to 8; and
- have a D50 (µm) average particle size ranging from 25µm and 200µm, preferably between 25µm and 50µm, more preferably between 30µm and 40µm; and/or
a D90 (µm) average particle size ranging from 100µm and 500µm, preferably between 140 µm and 400µm, more preferably between 170 µm and 390 µm.

It is also preferred that the concentrate of the invention contains no trace of non-polar organic solvent such as hexane.
It is further preferred that the concentrate of the invention contains no additive, and/or be constituted of at least 95% (w/w), preferably of at least 98 % (w/w) of organic matter originating from the oilseed.

### USES and METHODS

The sunflower seed protein concentrate according to the invention can be used in the food industry or feed industry, in particular for preparing a food product. In particular these food products can be related to bakery and cereals (ex. bread, biscuits, snack, cereals, and nutritional bars).

As the sunflower seed protein concentrate above described has a high water holding (absorption) capacity and / or gelling properties it is particularly well suited to be used as an ingredient (e.g., a structuring agent) for preparing meat based products (such as nuggets, knacks, ham or burgers) as well as meat (partial or total substitutes) in particular as meat alternatives or meat analogues (100% vegetarian products) (cf. Kyriakopoulou et *al*., 2019).

The invention also provides a process of making a foodstuff, a beverage or a food supplement, by adding and/or mixing any one of a sunflower seed protein concentrate above described, or a mixture thereof, to other ingredients.

Another object of the invention is the use of any one of a sunflower seed protein concentrate above described, or a mixture thereof, as a biofuel or bio-material or bio-composite, e.g. building materials.

Another object of the invention is the use of an oilseed protein concentrate above described, or a mixture thereof, as an animal feed (e.g. aquafeed) or a food or a dietary supplement or additive for animal and/or human consumption. In particular, the concentrate of the invention may comprise a high methionine content which is an essential amino acid for fish.

Foregoing and other objects and advantages of the invention will become more apparent from the following detailed description, which refers to non-limiting examples illustrating the uses according to the invention.
Figure 1 is a schematic representation of a process according to the invention.
Figure 2 is a schematic representation of the process of Example 1.
Figure 3 show the amino acid composition in g / 100g of proteins within 1) the starting kernels and 2) SunPC1.
Figure 4 shows the amino acid score of SunPC1 and of the starting kernels (based on Food and Agriculture Organization of the United Nations (FAO) recommendations 2007, for adults).
Figure 5 is a picture of the supernatant obtained using the colorimetric test on the concentrate SunPC1.
Figure 6 shows the test tubes used to determine the minimum gelling concentration of SunPC1.
Figure 7 shows the test tubes used to determine the minimum gelling concentration of SunPC2 (pH 7).
Figure 8 shows the test tubes used to determine the minimum gelling concentration of SunPC2 (pH 6.5).
Figure 9 shows a process diagram of the process of the Example 1.
Figure 10 is a schematic representation of the process of Example 2.

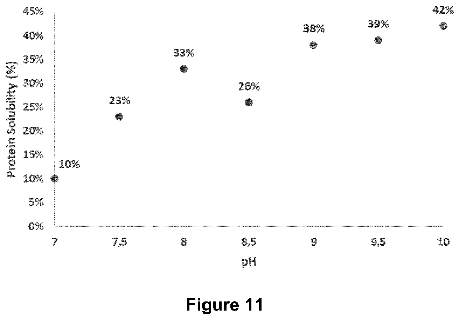

Figure 11 show the evolution of protein solubility of Example 2 as a function of pH

### EXAMPLES

The following examples were carried to exemplify the process of the invention.

The analytical methods used in these experiments were the following:
Dry matter: Total dry matter concentration in % (w/w) was determined using the French Standard NF EN ISO 6498 (2012)
Protein content: The protein content was determined by the Dumas/Kjeldahl method according to the French Standard (Norme AFNOR) NF EN ISO 16634-1. A conversion factor of 6.25 (N*6, 25) was used to determine the amount of protein (% (w/w)).
Ash content: The total ash content was determined according to the method described in the French Standard NF V18-101 (1977) entitled "Dosage des cendres brutes"/ "Measurement of raw hashes". The samples were preliminary grinded using a Retsch Grinder with a 1mm grid.

The following changes were made to NF V18-101 (1977):
- The NF V18-101 Standard recommends to first carbonising the test sample using a flame treatment or a progressive heating on a hot plate before it putting it in a muffle furnace at 550°C for a period of three hours. The method used to measure the ash content in the example avoids this preliminary calcination step, by increasing the heating time in the muffle furnace at 550°C from three (3) to thirteen (13) hours.
- In the event that the sample is insufficiently calcined, the Standard NF V18-101 requires the ashes to be moistened with pure water, dried in a drying oven (about 1 hour) , then heated for 1 hour in the muffle furnace. In the present case, it is recommended to increase the 1 hour heating of the dried sample in the muffle oven from 1 to 13 hours at 550°C. The resulting ash content is provided as a (w/w) percentage of the sample original weight.

Fat content: The fat content (%(w/w)) was determined according to the Standard NF ISO 6492 - B (2011) entitled "Aliments des animaux - Determination de la teneur en matière grasse/ Animal feeding stuffs - Determination of fat content" which measure the fat content after carrying out a hydrolysis with 3N aqueous chlorohydric acid. The samples were preliminary grinded using a RETSCH Grinder ZM 20 to achieve an average size of 1mm/using glass bead of 1mm.

The following changes were made to NF ISO 6492 - B (2011):
The mass of the sample being analysed was reduced to 0.8g.

NF ISO 6492 - B (2011) recommends the use of a Soxhlet extractor. Instead an automated system such as the one sold under SoxtecTM by FOSS (Denmark) was used.

Total polyphenols content: measured by the following colorimetric protocol:

### REFERENCE:

0.15g of gallic acid (from Riedel Haen, ref. 27645) mixed with 100ml of water is further diluted in 900mL of water (ratio 1/10). Then 50mL vials containing 0.0mL, 0.5mL, 1mL and 2mL of this solution are further diluted with 30mL of water. A 1mL aliquot from each vial is poured in a 50ml vial and 30ml of water are added. Then, 2.5 ml of Folin-Ciocalteu reagent (2N Sigma ref. F9252) is added to the vial and the vial is agitated. 7.5ml of a solution of sodium carbonate (20% (w:w) of anhydrous sodium carbonate) are then added. After 30 seconds, the mixture is agitated and then let to rest for 1H30mn at room temperature. The total volume is then adjusted to 100mL by adding more water to the vials. Absorbance of these solutions is measured at 765 nm using UV/VIS spectrophotometer against distilled water and a standard or calibration curve is obtained.

### SAMPLES:

The samples are prepared by grinding each of the solid samples with a ball mill. The powder used has a maximum size of the particles of 1mm. 1g of this powder is weighted in a 100mL vial. Close to 100mL of a mixture of MeOH/water/acetone/HC(1N), having the relative proportion 40/38/20/2, (v:v), is added to the sample. The vial's content is agitated for 1h at 60°C in a bain-marie. The total volume is then adjusted to 100mL by adding more solvent.

A 1mL aliquot from each vial is poured in a 50ml vial and 30ml of water are added. Then, 2.5 ml of Folin-Ciocalteu reagent (2N Sigma ref. F9252) is added to the vial and the vial is agitated. 7.5ml of a solution of sodium carbonate (20% (w:w) of anhydrous sodium carbonate) are then added. After 30 seconds, the mixture is agitated and then let to rest for 1H30mn at room temperature. The total volume is then adjusted to 100mL by adding more water to the vials. Absorbance of these solutions is measured at 765 nm using UV/VIS spectrophotometer against distilled water. The total phenolic content was read against the calibration curve and the results are expressed as micrograms per millilitre of gallic acid equivalents (µg/mL of GAE). The measures are duplicated.

Protein solubility: The protein solubility was tested on protein suspensions at 2% (w/w) dry matter content at pH 4, 6 and 8. The protein solubility was estimated by the Kjeldahl method on the supernatant after centrifugation (15000 g, 10 mi. The calculation of percentage of proteins solubility = Proteins in the supernatant % x 100 /proteins initially put in the solution.

Sugars content: The content of sugars (% (w/w)) was determined using the Luff Schoorl method as described in UE Regulation 152/2009.

Phosphorus content: The content of phosphorus (% (w/w)) was determined according to the French Standard NF ISO 6491(2011).

Soluble / insoluble fibers content: The content of soluble and the content of insoluble fibers (% (w/w) were determined using the Standard AOAC 991-43 (1995).

Amino acids: The content of amino acids (% (w/w)) in a protein concentrate (amino acid profile) was determined according to the French Standard NF EN ISO 13903/04 (2005).

Protein solubility: The protein solubility was tested on protein suspensions at 2% (w/w) dry matter content at pH 7 to 10. The protein solubility was estimated by the Kjeldahl method on the supernatant after centrifugation (15000 g, 10 min). The calculation of percentage of proteins solubility = Proteins in the supernatant % x 100 /proteins initially put in the solution.

Emulsifying capacity: The emulsifying capacity represents the amount of oil, such as sunflower oil, that the protein concentrate is able to emulsify. A solution at 1.5% (w/w) dry matter was prepared in water. After 1h of solubilisation under agitation at 500 rpm, the protein solution was shaken at 6 000 rpm by an IKA shaker. Sunflower oil was continuously added in the proteins solution under stirring at 6000 rpm with a flow of 50 mL/min. The maximum oil capacity was evaluated by phase inversion visually and by conductimetry. The reference used for this test is sodium casein.

Water holding capacity: The water holding capacity was measured by adding samples in water at a concentration of 20 mg/ml of dry matter. Solutions were blended 1 hour under stirring. After centrifugation at 15000 g during 10 min, the water content of the pellet was measured and compared with the initial weight of materials. Results are expressed as the numbers of times that sample retain its weight in water.

Minimum gelling concentration: Minimum gelling concentration was measured by preparing solutions of protein concentrate in water starting from 2% (w/w) in test tubes (PR-18009) at pH 6. The protein content or the solid content is increased by 2% for each tubes, usually 5 to 10 tubes are sufficient. After solubilization, solutions were heated 1h in a water-bath at 85°C and then cooled 2h at 4°C. A solution was considered to have formed a gel if it behaved like a liquid before heating (i.e. free-flowing) and did not flow when test-tube was put upside-down after heating.

### Example I: Production of a sunflower protein concentrate according to the invention (SunPC1)

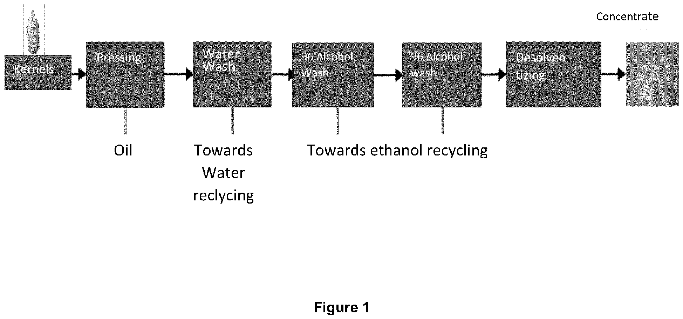

Process steps to obtain a concentrate according to this embodiment of the invention are represented in Figure 1.

### 1. Production of the sunflower press cake

The starting material was oleic sunflower kernels (supplied by the company FLANQUART SAS, Z.I. B - Impasse du Plat Rio BP 5 - 62232 ANNEZIN - FRANCE). The composition of the kernels (i.e. 100% dehulled sunflower seed) is given in Table 1, below. A press cake from sunflower kernels was produced with a MBU20 screw press (sold by the French Company OLEXA (Feuchy, FR). The temperature within the press was ranging from 60.8 to 71.2°C. 213 kg of press cake having an oil content of 7.9 wt. % / dry matter (DM) were produced. The composition of the press cake is shown in Table 1 below.

**Table 1: Composition of the sunflower kernels and the press cake**

| **Components in weight %*** | **Sunflower Kernels** | **Press cake** |
|---|---|---|
| Moisture | 4.9 | 9.7 |
| Fat | 55.0 | 7.6 |
| Protein (% as is) | 24.5 | / |
| Protein (% dry matter) | 25.7 | / |
| Protein (% defatted dry matter) | 58.9 | / |
| Cellulose | 5.3 | / |
| Ash | 3.4 | / |

| | | |
|---|---|---|
| * over total weight except specified otherwise Protein = Nx6.25 | | |

### 2. Washing steps and production of a concentrate according to the invention

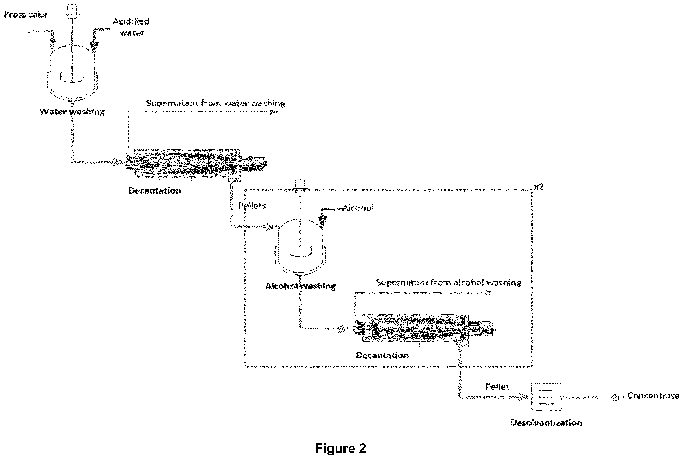

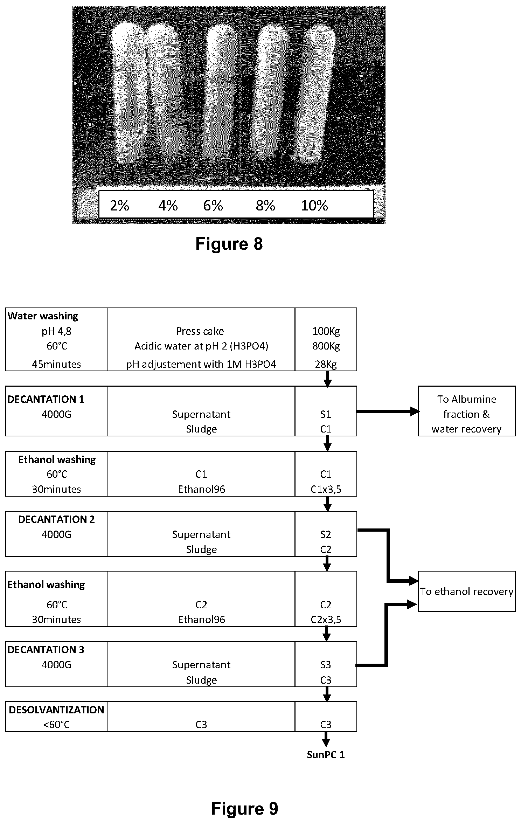

The washing and concentration steps are represented in more details on Figures 2 and 9.

### 2.1 Water washing step

One hundred (100) kilograms of the sunflower press cake was added to a stirred 3000L jacketed tank. The tank contained water acidified beforehand to pH 2 using phosphoric acid and preheated at 60 °C. The press cake/water weight ratio used was 1/8. The pH of the mixture was then adjusted to 4.8 using 1 M phosphoric acid, and the temperature maintained between 55-60 °C. At pH 4.8, the total weight of phosphoric acid solution added to adjust the pH was 28 Kg. At this pH, the mixture was stirred for 3h and then separated by centrifugation using a pilot decanter (Z23 Atex, Flottweg). During decantation, the decanter parameters were adjusted as seen in Table 2 below to obtain a liquid fraction with less than 0.2 wt.% of solids when the input slurry contains 25 wt.% of solids. The feed rate of the decanter was set at 600L/h. The diameter of the diaphragm (liquid phase separator) and the speed of the bowl were established between at 155-160 mm and 5600-5838 RPM, respectively. The differential speed between the bowl and the screw was adjusted during the decantation step.

**Table 2**

| **Solid/liquid separation 1 Z23** | In process samples | | Mean | Total weight (KG) |
|---|---|---|---|---|
| | Input solid content | (%) | 25 | |
| | Feed rate | (L/h) | 600 | |
| | Diameter | (mm) | 155-160 | |
| | Bowl speed | (RPM) | 5838-5600 | |
| | Liquid phase solid content | (%) | 0.15 | |
| | Total liquid phase | (KG) | 752 | 29.55 |
| | Liquid phase dry matter | (%) | 3.93 | |
| | Total solid phase | (KG) | 185 | 56.39 |
| | Solid phase dry matter | (%) | 30.48 | |

After the decantation, 752 Kg of liquid phase and 185 Kg of solid phase were obtained. The solid fraction was used for the next step.

### 2.2 First alcohol washing step

The solid fraction recovered from the previous decantation (185 Kg) was mixed with ethanol 96% preheated to 60 °C in the same tank. The weight ratio solids/96% ethanol used was 1/3.5, i.e. 647.5 Kg of ethanol 96% was used. The mixture was stirred for 30 minutes at constant temperature (55-60 °C) during 30 minutes and separated by centrifugation with the Z23 decanter. During decantation, the parameters were adjusted as seen in Table 3 below, to obtain a liquid fraction with less than 0.1 wt.% of solids when the input slurry contains 30 wt.% solids. The feed rate of the decanter was set at 600 L/h. The diameter of the diaphragm (liquid separator) were established between 165 and 155 mm and the rotation speed of the bowl between 5261 and 5673 RPM. The differential speed between the bowl and the screw was adjusted during decantation step.

**Table 3**

| **Solid/liquid separation 2** | In process samples | | Mean | Total weight (KG) |
|---|---|---|---|---|
| **Z23** | Input solid content | (%) | 30 | |
| | Feed rate | (L/h) | 600 | |
| | Diameter | (mm) | 155-165 | |
| | Bowl speed | (RPM) | 5261-5673 | |
| | Liquid phase solid content | (%) | <<0.1 | |
| | Total liquid phase | (KG) | 683 | 4.17 |
| | Liquid phase dry matter | (%) | 0.61 | |
| | Total solid phase | (KG) | 134 | 53.02 |
| | Solid phase dry matter | (%) | 39.57 | |

At the end of the decantation step, 683 Kg of liquid phase and 134 Kg of solid phase were obtained. The solid fraction was used for the next ethanol washing step.

### 2.3 Second alcohol washing step

The solid fraction recovered from the previous decantation (134 Kg) was mixed with ethanol 96% preheated to 60 °C in the same tank. The weight ratio solids/96% ethanol used was 1/3.5, i.e. 469 Kg of ethanol 96%. The mixture was stirred for 30 minutes at constant temperature (55-60 °C) during 30 minutes and separated by centrifugation with the Z23 decanter. During decantation, the decanter parameters was adjusted as seen in Table 4 to obtain a liquid fraction with less than 0.5 wt.% of solids when the input slurry contains 30 wt.% of solids. The feed rate of the decanter was set at 600 L/h. The diameter of the diaphragm (liquid separator) were established between 165mm and the rotation speed of the bowl between 5666 RPM. The differential speed between the bowl and the screw was adjusted during separation step.

**Table 4**

| **Solid/liquid separation 3** | In process samples | | Mean | Total weight (KG) |
|---|---|---|---|---|
| **Z23** | Input solid content | (%) | 35 | |
| | Feed rate | (L/h) | 600 | |
| | Diameter | (mm) | 165 | |
| | Bowl speed | (RPM) | 5666 | |
| | Liquid phase solid content | (%) | <<0.5 | |
| | Total liquid phase | (KG) | 478 | 1.72 |
| | Liquid phase dry matter | (%) | 0.36 | |
| | Total solid phase | (KG) | 114 | 47.44 |
| | Solid phase dry matter | (%) | 41.61 | |

At the end of the decantation step, 478 Kg of liquid phase and 114 Kg of solid phase were obtained. The solid fraction was used for the desolventizing step.

### 2.4 Desolventizing step

The total amount of solid fraction obtained in the previous step was desolventized by using a double cone vacuum dryer. 4 batches were made to dry the entire product as shown in Table 5. The drying temperature is kept below 60 ° C and the pressure reduced to avoid degrading the product.

**Table 5**

| | | | |
|---|---|---|---|
| Desolventizing step | Input wet solid | (KG) | 113,0 |
| | Output dry solid | (KG) | 50,4 |
| | Dry matter dry solid | (%) | 86,9 |
| | Duration | (h) | 19 |

After the drying step, around 50 Kg of sunflower protein concentrate (SunPC1) was obtained. The mean dry matter content of the total concentrate was 86,9 wt. %.

### 2.5 Milling

The SunPC1 obtained after desolventizing was milled by using a jet mill (Alpine 200 AFG, HOSOKAWA). The particles size before and after milling are shown in Table 6 below.

**Table 6**

| | D10 | D50 | D90 | D95 | D99 |
|---|---|---|---|---|---|
| Before milling | 12.68µm | 56.10µm | 371.30µm | 508.02µm | 734.11µm |
| After milling | 8.07µm | 35.40µm | 180.26µm | 286.47µm | 470.32µm |

### 3. Physical properties and chemical composition of the concentrate (SunPC1)

### 3.1 Composition of SunPC1

The composition of the SunPC1 is shown in Table 7 below. The protein purity of the concentrate is 67.8 wt. % / DM against 25.7 wt. % / DM in the kernels (100% dehulled sunflower seed). This corresponds to an absolute increase in the protein / DM rate of 42.1 wt. %. This enrichment is due to the significant elimination of fat and other compounds achieve by the process of the invention.

| **Table 7:** Composition of SunPC1111 | **SunPC1** |
|---|---|
| Protein /DM | 67.8 wt.% |
| Ash /DM | 6.8 wt.% |
| Fat /DM | 1.5 wt.% |
| Cellulose /DM Wendee Gravimetric NF V 03-040 | 8.1 wt.% |
| Neutral Detergent Fibre- NDF (%DM) - Acid hydrolysis NF V 18-122 (2013) /DM | 16.2 wt.% |
| Acid Detergent Fibre - ADF (%DM) - Acid Hydrolysis NF V 18-122 (2013) | 10.2 wt.% |
| Acid Detergent Lignin - ADL (%DM) - Meth. Acid hydrolysis NF V18-122 (2013) | 0.8 wt.% |
| Soluble fibers /DM | 24.7 wt.% |
| Unsoluble fibers /DM | 2.3 wt.% |
| Total sugars /DM | 0.9 wt.% |
| Sodium /DM | 0.0 wt.% |
| Phosphorus /DM | 1.7 wt.% |
| Total phenolic compounds /DM | 0.68 wt.% |
| Raffinose /DM | <0.1 wt. % |
| Stachyose /DM | <0.1 wt. % |
| Verbascose /DM | <0.1 wt. % |

### Test for acceptable elimination of chlorogenic acid.

### Method for identifying the presence of chlorogenic acid by a visual colorimetric test

A mass of 1 g of solid is introduced into a beaker and then 50 g of alkaline water at pH 9 is added and the pH of the suspension adjusted to pH 9. After 1 h at room temperature, the pH is again checked and readjusted if necessary then the suspension is centrifuged at 4000 g for 10 minutes or filtered with Whatman filter paper. The presence of chlorogenic acid is revealed by the green color of the supernatant or of the filtrate. The absence of color indicates a potentially sufficient elimination of chlorogenic acid for culinary use. The absence of green coloration during the colorimetric test of chlorogenic acid at pH 9 indicates sufficient elimination of these molecules.

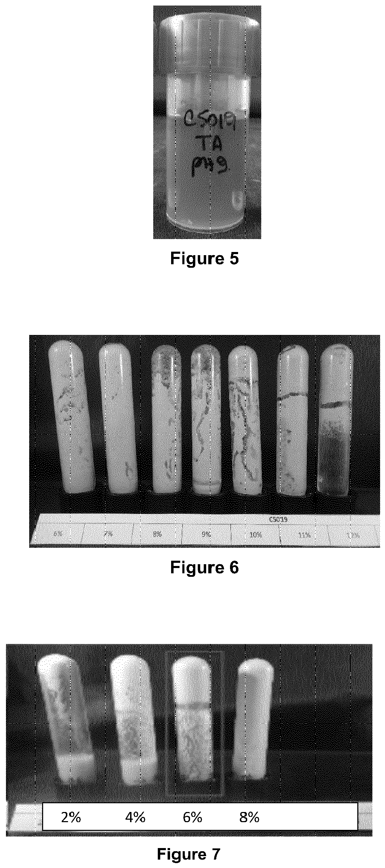

The sunflower concentrate SunPC1 was tested according to the above method and the resulting filtrate/supernatant shown in Figure 5 had an orange light color without any greenish hue.

### 3.2 Nutritional properties of SunPC1

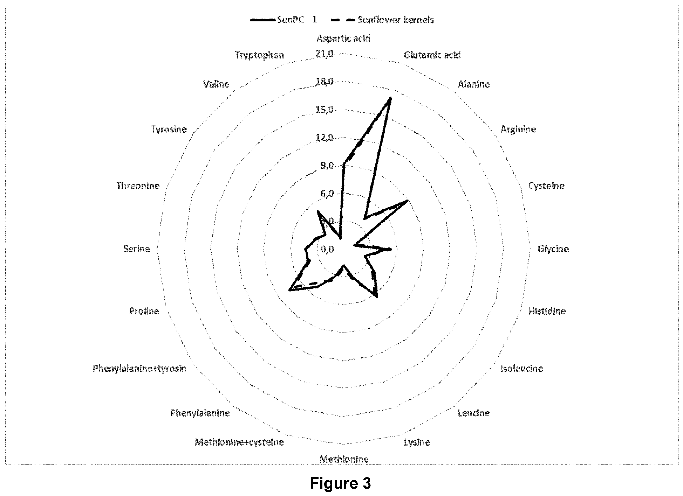

The amino acid profile (g/100g protein) of the SunPC1 is compared (Figure 3) with the starting kernels. There is very little variation between the kernels and SunPC1 with the exception of a slightly less glutamic acid content in the kernels.

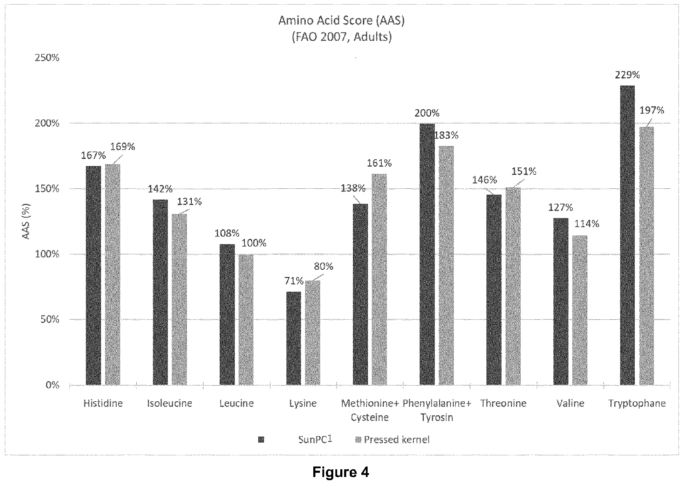

SunPC1 has a lower lysine content compared to soybean or pea seed proteins which are well studied in the literature (cf. Février (1996)). The process of the invention does not degrade lysine content. Lysine is the (only) limiting amino acid in the kernel and consequently in SunPC1 as it lysine amino acid content is only 71% (w/w) of the content recommended by the FAO 2007). However, as shown in Figure 4, the high content of sulfur amino acid (Amino acid score of "Methionine + Cysteine" ≥ 130%) in SunPC1 is remarkable, and constitutes a good source of complementarity with pulses, such as peas, which are deficient in these amino acids.

In conclusion, SunPC1 constitutes a good source of protein intake.

### 3.3 Functional properties of SunPC1

The functional properties of SunPC1 are reported in Table 8 below. Water Holding Capacity : 1 g of concentrate (i.e. solids) can retain 4.7 g of water. It has good emulsifying properties : 1.51 g of concentrate (equivalent to about 1 g protein) can emulsify 157.6 g of sunflower oil.

**Table 8**

| | | **SunPC1** |
|---|---|---|
| Water holding capacity (g of water /g of solids) | | 4.7 |
| Emulsifying capacity **(g of sunflower oil/ 1 g of solids)** | | 157.6 |
| Minimum gelling concentration* | % proteins | 12% |

| | | |
|---|---|---|
| *See Figure 6 | | |

### Example 2: Production of a sunflower protein concentrates according to the invention with a single alcohol wash.

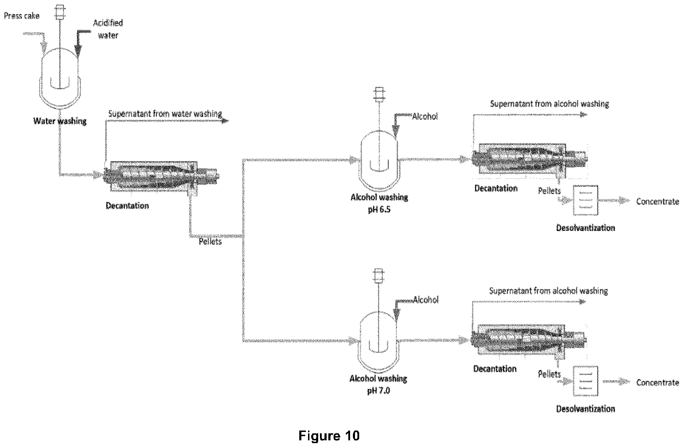

Two sunflower protein concentrates according to the invention were produced at a small-pilot scale from 20 kg pressed sunflower kernels (fully dehulled sunflower seeds). The process steps carried out are shown on the production diagram of Figure 10 for both concentrates.

After the step of washing with acidic water, the washed press cake was divided into two batches. The pH of the solids/ethanol mixture was adjusted to 6.5 with 1M NaOH for the first batch, for the second batch the pH was adjusted to 7.0, also using 1M NaOH.

The combination of a single acidic wash with a single alcohol wash was shown to be effective to dispose of the chlorogenic acid.

### 1. Production of sunflower press cake

Press cake from sunflower kernels (fully dehulled sunflower seeds) was produced with the MBU20 screw press (Olexa, France). At the start, the speed of rotation of the press was adjusted to 50 Hz without tightening the cone. Then, as the press start to heat due to the pressing of the first kilograms of kernels, the rotation speed was gradually reduced to 3.8 Hz and the cone was gradually tightened. This tightening made it possible to form a plug at the end of the press which blocked the outlet of the press cake. Then, a slight loosening of the cone allowed the passage of some of the pressed kernels and the formation of scales. The speed of rotation was then stabilized at 10 Hz. A drip of water was placed at the feed hopper. The press cake output was 3.0 kg/h. A similar oil flow output was observed. The temperature observed in the press cage varied between 65°C and 67°C. After pressing, 26 kg of sunflower press cake were produced. The chemical composition of this press cake is shown in the table 9 below:

**Table 9**

| **Components in weight %*** | **Press cake** |
|---|---|
| Moisture | 9.5% |
| Fat content (% as is) | 10.9% |
| Protein (Nx6,25) (% as is) | 47.7% |
| Protein (% dry matter) | 53% |
| Protein (% defatted dry matter) | 59.9% |
| Ash content (% as is) | 6.5% |

| | |
|---|---|
| * over total weight except specified otherwise Protein = Nx6.25 | |

Compared to the press cake obtained in the Example 1, the residual fat content is relatively higher (+ 38%).

### 2. Water washing step

Twenty (20) kilograms of the sunflower press cake produced previously were added to a stirred 250L jacketed agitated reactor, containing water preheated at 60 °C. The water was acidified beforehand to pH 2 using phosphoric acid. The press cake/water weight ratio used was 1/8. The pH of the mixture was then adjusted to 4.8 using 1 M phosphoric acid or 1 M sodium hydroxide, and the temperature maintained between 55-60 °C. At pH 4.8, the mixture was stirred for 45 minutes and then separated by centrifugation at 4000 g using a pilot decanter (Z23, Flottweg). The decanter parameters are shown below:
- Decanter Z23, Flottweg
- Rotation speed : 4500 g
- Impeller: 140 mm
- Differential speed : 15%
- Back pressure : 0 bar

The solid fraction recovered after decantation was used for the single ethanol washing step.

### 3. Ethanol washing step and concentrate isolation

The solid fraction recovered after the acidic water washing step was divided into two parts to carry out a single ethanol wash at either pH 6.5 or pH 7.0.

### 3.1. 96% ethanol washing at pH 6.5

The solid fraction recovered from the decantation was mixed with ethanol 96% preheated to 60 °C. The ratio solids : 96% ethanol used is 1 / 3.5 in weight. The pH of the mixture was adjusted to 6.5 using 1M NaOH. The mixture was stirred for 30 minutes at constant temperature (about 55-60 °C). After 30 minutes, the mixture was separated by centrifugation at 4000 g (MD80 Lemitec). The parameters of the decanter centrifuge are given below:
- Decanter Lemitec,
- Rotation speed : 4000 g,
- Diaphragm : 12mm,
- Differential speed 15%.

### 3.2. 96% ethanol washing at pH 7.0

For this test, the same parameters as the ones for the previous example (see § 3.1) were applied with the exception of the pH which was adjusted to 7.0 instead of 6.5.

The two solid fractions recovered after solid / liquid separation were dried separately in a ventilated oven at 60 °C and for 10 h and then micronized using the Impact Mill from Hosokawa (ZPS 100, Hosokawa-Alpine) to obtain a flour having D₅₀ of 37 µm (for the pH 6.5 test) and D₅₀ 43 µm (for the pH 7.0 test).

The physicochemical composition of the products obtained, SunPC2, is shown in table 10 below:

**Table 10**

| In wt.% | **SunPC2 (pH 6,5)** | **SunPC2 (pH 7,0)** |
|---|---|---|
| Dry matter | 96.4% | 92.6% |
| Protein / DM | 61.1 | 60.6 |
| Fat / DM | 9.8% | 11.4% |
| Cellulose / DM | 9.8% | 9.6% |
| Insoluble fibres / DM | 21.6 | 23.2 |
| Soluble fibres / DM | 1.6 | 1.2 |
| Ash / DM | 6.0% | 6.2% |
| Total sugars / DM | 0.0% | 0.1% |
| Phosphore / DM | 1.5% | 1.5% |

The protein content of the SunPC2 concentrates obtained in this example is about 61wt.% / DM and the residual fat is relatively high [9.8-11.4 wt.% / DM]. The sunflower concentrates were tested according to the colorimetric method described in Example 1. Lack of green coloring at pH 9 of the supernatant (light beige in these cases) demonstrates sufficient elimination of the chlorogenic acid from these two products.

### 4. Functional properties of the concentrates and comparison with the one of example 1 (two ethanol washes)

Functional properties of the SunPC2 products are reported in Table 11 below.

**Table 11**

| | | **SunPC2 (pH 6.5)** | **SunPC2 (pH 7.0)** | **SunPC1** |
|---|---|---|---|---|
| **Water Holding Capacity (g of water / 1 g of solids)** | | 3.6 | 3.7 | 4.7 |
| **Emulsifying capacity (g of sunflower oil/ 1 g of solids)** | | 175,6 | 162,6 | 157.6 |
| **Minimum gelling concentration with heating** | % proteins | 6% (see Fig.8) | 6% (See Fig.7) | 12% (see Fig.6) |
| | % solids | 10% | 10% | 19% |

Compared to SunPC1, both SunPC2 concentrates gelled with less protein content (respectively 12% for SunPC1 and 6% for SunPC2)and have comparable oil emulsifying capacity (See Figures 7 (pH 7) and 8 (pH 6.5)). However, water retention capacities are lower compared to the SunPC1 concentrate. This would be due to higher residual fat content in SunPC2 as well as the single alcohol washing step.

### Example 3 Comparative tests

In order to show the effect of the specific successive steps of the method of the invention, comparative tests were carried out. These tests, referenced PMM1 to PMM4 were carried out on sunflower meal from fully (100%) dehulled seeds which were pressed and washed in the same conditions but for the nature of the wash or sequence used. To show that a lower concentration of ethanol can be used in the alcohol wash, a concentrate SunPC3 was made according to the process of the invention using one alcoholic wash at 80% w/w ethanol. The results are shown in Table 12 below.

**Table 12**

| | 1st Wash | 2^{nd} Wash 2 | 3rd Wash | Protein wt.% /DM | Colorimetric test |
|---|---|---|---|---|---|
| **SunPC 1** | **Water, pH 4.8** | **Ethanol 96** | **Ethanol 96** | **67.8** | **Absence of green color / hue** |
| **SunPC 2** | **Water, pH 4.8** | **Ethanol 96, pH 6.5 or pH 7** | **No** | **61,1 (pH 6.5) 60,6 (pH 7)** | **Absence of green colour / hue** |
| **SunPC 3** | **Water, pH 4.8** | **Ethanol 80** | **No** | **62.1** | **Absence of green colour / hue** |
| SunPC 4 | Water, pH 4.8 | Water pH 7 | No | 54.0 | Not measured |
| SunPC 5 | Ethanol 80, pH 4.8 | Ethanol 96 | No | 64.9 | Presence of a green colour / hue |
| SunPC 6 | Ethanol 96 | Water pH 4.8 | No | 61.9 | Presence of a green colour / hue |
| SunPC 7 | Ethanol 96 | Ethanol 80 pH 4.8 | No | 61,3 | Presence of a green colour / hue |

These tests show that only the particular combination of an acidic washing step and a subsequent alcohol washing step permits to achieve a concentrate having both a high amount of protein and a low degree of chlorogenic acid.

Further tests were carried on 50 % dehulled sunflower seed. The concentrate SunPC8 was obtained using a second acidic wash instead of an alcoholic wash. The results are shown in Table 13 below.

**Table 13**

| | 1st Wash | 2ndWash2 | Protein wt.% / DM | Colorimetric test |
|---|---|---|---|---|
| SunPC8 | Water pH 4.8 | Water pH 4.8 | 44.3* | Not measured |

| | | | | |
|---|---|---|---|---|
| * Value measured after additional sieving steps to remove residual hull | | | | |

### REFERENCES

- Février, C., G. Viroben - Gordon B. (1996) « La valeur nutritionnelle des matières protéiques végétales » Protéines végétales P.588-590
- Laisney, J. (1984). L'huilerie moderne. Compagnie Française pour le Développement des Fibres Textiles (CFDT).
- Matthäus, B. (2012). Chapter 2: Oil Technology. In: S.K. Gupta (ed.), Technological Innovations in Major World Oil Crops, Volume 2: Perspectives, New York: NY Springer Science+Business Media, LLC, pp 23-92.
- Unger, E.H. (1990). Commercial Processing of Canola and Rapeseed: Crushing and Oil Extraction. In: Shahidi F. (eds) Canola and Rapeseed. Springer, Boston, MA, pp 235-249.
- Rahma E.H. et al. (1981), "Removal of Polyphenols from sunflower Meal by Various Solvents: Effects on Functional Properties." Journal of food science, 46: 1521-1522.
- Rahma E.H. et al. (1979), "Characterization of sunflower proteins". Journal of food science, 44: 579-582.
- G. Sripad and M. S. Narasinga Rao "Effect of Methods To Remove Polyphenols from Sunflower Meal on the Physicochemical Properties of the Proteins" J. Agric. Food Chem. 1987, 35, 962-967.
- World Health Organization, & United Nations University. (2007). Protein and amino acid requirements in human nutrition (Vol. 935 p50). World Health Organization.
- Kyriakopoulou, K. (2019). Chapter 6: Plant-Based Meat Analogues. In: Sustainable Meat Production and Processing. Galanakis, Charis, Academic Press, ISBN 9780128148747, pp. 103-126.
- Laisney, J. (1984). L'huilerie moderne. Compagnie Française pour le Développement des Fibres Textiles (CFDT).
- Matthäus, B. (2012). Chapter 2: Oil Technology. In: S.K. Gupta (ed.), Technological Innovations in Major World Oil Crops, Volume 2: Perspectives, New York: NY Springer Science+Business Media, LLC, pp 23-92.

## Claims

1. A process for producing a protein concentrate from oilseed, said process comprising the successive steps of:
a) providing a press cake from oilseed, said oilseed being seeds from a plant of the genus *Helianthus* and more particularly from the species *Helianthus annuus L.,* said oilseed being at least partially dehulled before being pressed;
b) washing said press cake by mixing it with a first acidic aqueous solution to obtain an aqueous-washed oilseed meal;
c) washing said aqueous-washed oilseed meal by mixing it with a first alcohol solvent, to obtain a first alcohol-washed oilseed meal, wherein said first alcohol solvent is a hydrous or a non-hydrous alcohol and has an alcohol concentration which is above 75 % w/w; and
d) separating said alcohol-washed oilseed meal from said solvent to obtain said protein concentrate.

2. The process of Claim 1, wherein said oilseed are kernels.

3. The process of anyone of Claim 1 or 2, wherein said press cake is obtained by cold pressing said oilseed, preferably the temperature of the oilseed during the pressing step shall be maintained as of 80°C or less.

4. The process of anyone of claims 1 to 3, wherein the pH of acidic wash of step b) is adjusted to range from 4.4 to 5.2, preferably from 4.6 to 5.0 and most preferably from 4.7 to 4.9.

5. The process of anyone of claims 1 to 4, wherein said process comprises only one acidic washing step.

6. The process of anyone of claims 1 to 5, wherein said first alcohol solvent is a hydrous, a non-hydrous or an azeotrope mixture of alcohol, preferably an azeotrope.

7. The process of anyone of claims 1 to 6, wherein said first alcohol solvent is ethanol, preferably at a concentration of 96% w/w.

8. The process of anyone of claims 1 to 7, wherein step c) of said process is repeated no more than once.

9. The process of anyone of claims 1 to 8, wherein step c) is carried out at a pH of 6.5 ±0.2.

10. The process of anyone of claims 1 to 9, wherein said separating step comprise a drying step.

11. A oilseed protein concentrate, wherein said concentrate comprises:
- a protein content of at least 55% dry matter w/w, preferably at least 65% dry matter w/w, and less than 80% dry matter w/w (N x 6.25); and
- a content of polyphenol compounds of less than 2% dry matter w/w, preferably equal or less than 1 % dry matter w/w;
wherein said oilseed is from a plant from the genus *Helianthus.*

12. The oilseed protein concentrate according to claim 11, wherein said concentrate comprises a fat content of less than 14% dry matter w/w, preferably less than 10% dry matter w/w, in particular less than 3 % dry matter w/w, and optionally comprises a water holding capacity of at least 3 g/g, preferably from 3.4 g/g to 7.0 g/g, in particular from 4.8 g/g to 5.5 g/g.

13. The oilseed protein concentrate according to claims 11 or 12, wherein said concentrate has a white colour.

14. The oilseed protein concentrate according to anyone of claims 11 to 13, wherein said concentrate is obtained, or obtainable, by the process of anyone of claims 1 to 10

15. Use of the oilseed protein concentrate of anyone of Claims 11 to 14, for preparing a food product or a feed for human or animal consumption.
